# FASCICULE DE BREVET EUROPEEN

(11) **EP 3 252 692 B1**
(45) Date de publication et mention de la délivrance du brevet: **26.03.2025**
(21) Numéro de dépôt: 17173354.6
(22) Date de dépôt: 30.05.2017
(51) Int. Cl.: G06Q 20/40, G06Q 20/32

(54) **PROCÉDÉ DE FOURNITURE DE DONNÉES RELATIVES À UNE TRANSACTION DE PAIEMENT, DISPOSITIF ET PROGRAMME CORRESPONDANT**
VERFAHREN ZUR LIEFERUNG DER ENTSPRECHENDEN DATEN EINER ZAHLUNGSTRANSAKTION, ENTSPRECHENDE VORRICHTUNG UND ENTSPRECHENDES PROGRAMM
METHOD FOR SUPPLYING DATA RELATIVE TO A PAYMENT TRANSACTION, DEVICE AND CORRESPONDING PROGRAM

(30) Priorité: 03.06.2016 FR 1655065
(43) Date de publication de la demande: 06.12.2017
(73) Titulaire: Banks and Acquirers International Holding, 75015 Paris (FR)
(72) Inventeur: GERAUD, Rémi, 75018 Paris (FR)
(74) Mandataire: Germain Maureau

(56) Documents cités:
- EP-A1- 2 779 064
- WO-A1-2016/075396
- FR-A1- 3 018 027
- GB-A- 2 526 518
- US-A1- 2013 006 847
- US-A1- 2015 088 674

## Description

### 1. Domaine de l'invention

L'invention se rapporte au domaine de l'authentification d'utilisateur. La technique se rapporte plus particulièrement à l'authentification d'utilisateurs dans le cadre d'opérations de paiement et d'accès à des biens ou des services.

### 2. Art Antérieur

Depuis quelques années, les techniques de réalisation de transactions de paiement ont été profondément modifiées, principalement à cause du développement rapide des solutions de paiement sur terminal mobile. En effet, les terminaux de communication mobiles (également appelés smartphones, pour téléphone intelligent en français) ont évolués jusqu'à devenir de véritables ordinateurs de poche dont la puissance de calcul et les capacités de traitement sont équivalentes à celles des ordinateurs de bureau. Ainsi, grâce aux portefeuilles électroniques, qui sont hébergés sur un terminal de communication, il est possible de réaliser une transaction de paiement directement depuis ce terminal de communication.

La plupart des commerçants dispose de terminaux de paiement supportant au moins une technologie de paiement permettant à un client de réaliser une transaction de paiement via un terminal de communication. Une telle technologie de paiement utilise par exemple des communications NFC (pour Near Field Communication en anglais) entre le terminal de paiement et le terminal de communication pour réaliser la transaction de paiement. Une autre technologie de paiement est par exemple basée sur l'utilisation de QR codes pour transmettre au terminal de communication les données relatives à la transaction à effectuer, la transaction de paiement est ensuite réalisée via un serveur de paiement.

Afin de pouvoir proposer des transactions de paiement au plus grand nombre d'utilisateurs de terminaux de communication, la plupart des commerçants disposent de terminaux de paiement multimodaux, qui permettent la réalisation de transactions de paiement à l'aide de plusieurs types de technologies de paiement.

Lorsqu'un utilisateur souhaite utiliser son terminal de communication pour réalisation une transaction de paiement vers un tel terminal de paiement multimodal, le commerçant doit sélectionner manuellement sur le terminal de paiement un mode de transaction de paiement selon lequel la transaction de paiement sera effectuée avant d'initialiser la transaction.

Dans l'art antérieur, en fonction des caractéristiques du terminal de communication, le commerçant peut sélectionner un mode de transaction de paiement (NFC ou QR code) sur le terminal de paiement afin de réaliser la transaction. En pratique, le commerçant n'étant pas un expert des terminaux de communication, un mode de transaction de paiement par défaut est sélectionné, par le commerçant ou par le constructeur du terminal de paiement. En général, ce mode par défaut est le mode de transaction par QR code. Un terminal de communication ne disposant pas de ce mode de transaction de paiement, mais disposant d'un autre mode de transaction de paiement également supporté par le terminal de paiement, ne peut alors pas réaliser de transaction de paiement avec le terminal de paiement. L'utilisateur d'un tel terminal de communication doit alors utiliser un autre moyen de paiement pour payer le commerçant (carte bancaire, espèces, chèque, ...), voire renoncer à son achat.

De plus, lorsque le terminal de communication supporte plusieurs technologies de paiement, par exemple NFC et QRcode, l'utilisateur du terminal de communication ne sait pas toujours quels sont les modes de transactions de paiement disponibles sur son terminal de communication, ni lequel est le plus approprié pour réaliser la transaction.

La demande de brevet EP 2 779 064 A1 décrit une méthode et un système de transaction mobile comportant un terminal de paiement supportant les technologies NFC et QR code qui sélectionne la technologie utilisée pour la transaction en fonction d'une préférence reçue de l'appareil d'un client. Le document US 2013/0006847 A1 décrit un procédé selon lequel l'initialisation d'une transaction de paiement est réalisée via un premier mode de communication, et la poursuite et la finalisation de la transaction est réalisée via un deuxième mode de communication.

### 3. Exposé de l'invention

L'invention vient améliorer l'état de la technique. Elle concerne un procédé de fourniture de données relatives à une transaction de paiement, à un terminal de communication selon la revendication 1.

Le procédé de fourniture permet ainsi de simplifier pour le commerçant l'utilisation d'un dispositif de paiement multimodal. Un tel dispositif de paiement multimodal est un dispositif de paiement apte à réaliser une transaction de paiement avec un terminal de communication selon au moins deux modes de transaction de paiement distincts.

Le terminal de communication d'un utilisateur peut alors utiliser le premier signal ou le deuxième signal émis par le dispositif de paiement pour réaliser la transaction de paiement en fonction des caractéristiques du terminal de communication, et notamment du mode de transaction de paiement supporté par l'application de paiement mise en œuvre sur le terminal de communication.

Les différents modes ou caractéristiques de réalisation mentionnés ci-après peuvent être ajoutés indépendamment ou en combinaison les uns avec les autres, aux caractéristiques du procédé de fourniture défini ci-dessus.

Ledit deuxième signal est un code visuel 2D, et l'étape d'émission du deuxième signal correspond à un affichage dudit code visuel 2D sur un écran du dispositif de paiement.

Selon l'invention, le code visuel 2D est un QR code (pour Quick Response en anglais). Un terminal de communication peut ainsi scanner le code visuel 2D depuis l'écran du dispositif de paiement pour réaliser la transaction, par exemple lorsque le terminal de communication n'est pas adapté à traiter le premier signal émis par le dispositif de paiement via le premier canal de communication. La transaction de paiement est alors réalisée via le deuxième canal de communication, qui est dans cet exemple le réseau de communication, par exemple l'Internet.

Ledit deuxième signal comprend une information représentative de l'émission dudit premier signal.

Cela permet ainsi d'avertir le terminal de communication et l'utilisateur d'un tel terminal de la présence du premier signal. Par exemple, lorsque le premier signal est un signal NFC émis par le dispositif de paiement, et que l'application de paiement du terminal de communication supporte les deux modes de transaction de paiement ou que le terminal de communication supporte deux applications de paiement mettant respectivement en œuvre le premier et le deuxième mode de transaction de paiement, le terminal de communication ou l'utilisateur peut alors choisir le mode de transaction de paiement le plus adapté, par exemple le plus rapide ou le plus sécurisé.

Ou alors, si le terminal de communication de l'utilisateur supporte le premier mode de transaction, mais pas le deuxième mode de transaction, l'utilisateur peut renoncer à réaliser la transaction de paiement via son terminal de communication car il ne voit que le deuxième signal qui est un signal visuel. Ce mode particulier de réalisation de l'invention permet d'avertir l'utilisateur (ou directement le terminal de communication) que le dispositif de paiement est multimodal et supporte les deux modes de transaction de paiement. Ainsi, l'utilisateur est incité à utiliser le premier mode de transaction de paiement.

Selon un autre mode particulier de réalisation de l'invention, le procédé de fourniture comprend en outre une étape de réception d'un signal de réponse via le premier ou le deuxième canal de communication.

L'invention concerne également un dispositif de paiement apte à réaliser une transaction de paiement avec un terminal de communication selon au moins deux modes de transaction de paiement selon la revendication 3.

L'invention concerne également un terminal de paiement comprenant un dispositif selon l'un quelconque des modes de réalisation décrits précédemment.

Un autre aspect de l'invention concerne un procédé de sélection d'un mode de transaction de paiement pour réaliser une transaction de paiement initiée par un dispositif de paiement selon la revendication 6.

Les différents modes ou caractéristiques de réalisation mentionnés ci-après peuvent être ajoutés indépendamment ou en combinaison les uns avec les autres, aux caractéristiques du procédé de sélection défini ci-dessus.

Le terminal de communication reçoit un signal de courte portée NFC émis par le dispositif de paiement et détecte donc immédiatement la possibilité d'un deuxième mode de transaction de paiement possible.

Le signal reçu par le terminal de communication comprend la deuxième information d'un mode de transaction de paiement. Avantageusement, l'utilisateur du terminal de communication est averti de la possibilité d'utiliser un deuxième mode transaction de paiement. Par exemple, lorsque l'application de paiement du terminal de communication n'a pas détecté de deuxième signal, par exemple un signal NFC émis par le dispositif de paiement, le mode de transaction de paiement par NFC n'est pas activé sur le terminal de communication. Le signal reçu est un QRcode comprenant une information visuelle ou une information codée dans le QR code indiquant l'émission d'un signal NFC**.** l'utilisateur du terminal de communication peut activer le mode de transaction de paiement par NFC sur son terminal en plus du mode de transaction de paiement par QR code. Ou bien le terminal de communication active un tel mode suite à la détection de l'information indiquant l'émission d'un signal NFC par le dispositif de paiement dans le QRcode. Le terminal de communication peut ensuite sélectionner le mode de transaction de paiement le plus approprié.

Selon un autre mode particulier de réalisation de l'invention, la caractéristique de la transaction de paiement correspond à un montant de la transaction.

Avantageusement, le mode de transaction est sélectionné en fonction du montant dans la transaction. Par exemple, il peut être avantageux d'utiliser un mode de transaction nécessitant un serveur de paiement lorsque le montant est supérieur à un seuil prédéterminé, par exemple 20 euros, afin de pouvoir effectuer des vérifications supplémentaires auprès de la banque de l'utilisateur, au cours de la transaction de paiement et garantir le paiement auprès du commerçant.

Corrélativement, l'invention concerne aussi un terminal de communication adapté pour sélectionner un mode de transaction de paiement pour réaliser une transaction de paiement initiée par un dispositif de paiement selon la revendication 8.

Le procédé de fourniture, respectivement le procédé de sélection, selon l'invention peut être mis en œuvre de diverses manières, notamment sous forme câblée ou sous forme logicielle.

Selon un mode particulier de réalisation de l'invention, le procédé de fourniture, respectivement le procédé de sélection, est mis en œuvre par un programme d'ordinateur. L'invention concerne également un programme d'ordinateur comportant des instructions pour la mise en œuvre du procédé de fourniture ou du procédé de sélection selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution des procédés en question.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un environnement de mise en œuvre de l'invention;
- la figure 2 illustre les principales étapes du procédé de fourniture de données relatives à une transaction de paiement selon un mode de réalisation de l'invention ;
- la figure 3 représente un signal relatif à un mode de transaction de paiement émis selon un mode particulier de réalisation de l'invention;
- la figure 4 présente la structure simplifiée d'un dispositif de paiement selon un mode de réalisation de l'invention,
- la figure 5 présente les principales étapes du procédé de sélection d'un mode de transaction de paiement selon un mode particulier de réalisation de l'invention,
- la figure 6 présente la structure simplifiée d'un terminal de communication selon un mode de réalisation de l'invention.

### 5. Description d'un mode de réalisation de l'invention

### 5.1. Principe général

L'invention porte sur un dispositif de paiement électronique multimodal, c'est-à-dire un dispositif de paiement électronique adapté pour réaliser des transactions de paiement avec un terminal de communication selon différentes technologies de paiement. Pour réaliser de telles transactions de paiement, il n'est pas nécessaire que le terminal de communication et le dispositif de paiement électronique soient en contact physique. De telles technologies de paiement peuvent utiliser soit un canal de communication d'un réseau de courte portée (NFC, Bluethooth^{©}, WIFI, ...), soit un réseau de communication tel que l'Internet.

Avantageusement, l'invention permet l'émission simultanée d'au moins deux signaux relatifs à une même transaction de paiement, chaque signal étant représentatif d'une technologie de paiement différente. Ainsi, le fonctionnement des dispositifs de paiement multimodaux est simplifié du point de vue du commerçant et la réalisation de la transaction est également simplifiée pour l'utilisateur d'un terminal de communication qui souhaite réaliser la transaction de paiement via son terminal de communication : le terminal de communication peut choisir la technologie qui lui convient le mieux pour effectuer le paiement.

De plus, l'invention permet également de simplifier l'utilisation d'un terminal de communication qui supporte plusieurs modes de transaction de paiement, soit par l'intermédiaire d'une même application de paiement multimodale, soit via plusieurs applications de paiement. En effet, l'invention permet à un terminal de communication de sélectionner un mode de transaction de paiement lorsque plusieurs modes de transaction de paiement sont disponibles auprès du dispositif de paiement.

Dès lors, cette technique permet au commerçant, qui dispose du dispositif de paiement multimodal, d'accepter tout type de paiement, quelle que soit la technologie employée. Par ailleurs, un tel terminal de paiement facilite la réalisation des transactions pour les utilisateurs : ceux-ci n'ont pas à se soucier de savoir quelle technologie de paiement ils peuvent utiliser en fonction de leur modèle de terminal : comme plusieurs signaux sont émis concomitamment, le terminal de communication (ou l'utilisateur) choisit le signal qui convient.

En fonction des modes de réalisation, la transaction de paiement en elle-même peut être réalisée soit directement par le dispositif de paiement (si par exemple le terminal de communication transmet des données de paiement au dispositif de paiement), soit par l'intermédiaire d'un serveur de paiement auquel le terminal de communication se connecte (dans ce cas, le signal émis -en double- comprend une adresse à laquelle le terminal de communication se connecte pour effectuer le paiement). Dans ce dernier cas, une donnée ou plusieurs données d'authentification sont produites : ces données servent à la vérification de l'authenticité du lien entre le dispositif de paiement et la transaction ; ces données servent également à l'identification des moyens de paiement utilisés (il s'agit par exemple d'un code d'authentification des moyens de paiement).

### 5.2. Exemple de mise en œuvre

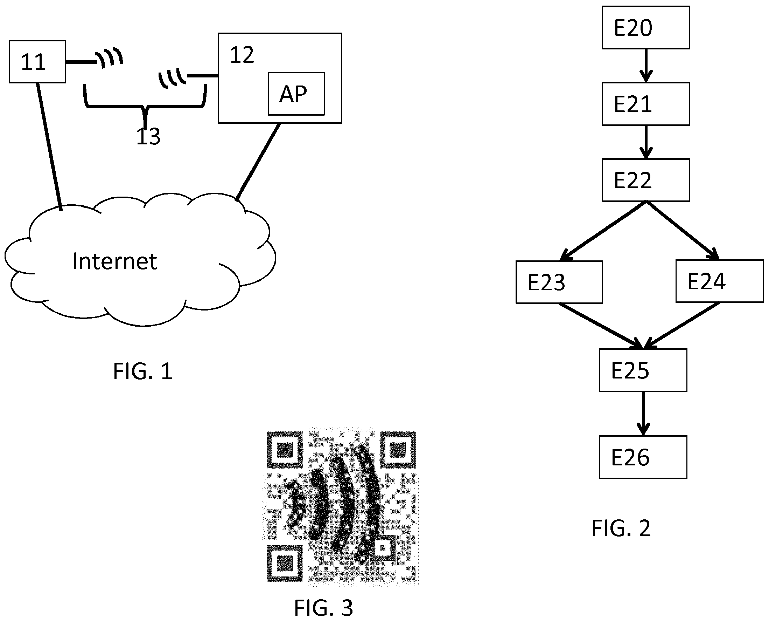

La figure 1 présente un environnement de mise en œuvre de l'invention selon un mode particulier de réalisation. Dans cet exemple, un dispositif de paiement électronique 11 multimodal est placé chez un commerçant. Un utilisateur souhaite réaliser un paiement chez le commerçant via son terminal de communication 12. Le terminal de communication 12 est par exemple un terminal mobile de type smartphone.

Le terminal de communication 12 est apte à établir des communications via un réseau de communication 10, tel que l'Internet, ou un réseau de données IP mobiles, pour communiquer avec d'autres terminaux de communication ou des serveurs également connectés au réseau de communication.

Une application de paiement électronique AP est installée sur le terminal de communication 12. L'application de paiement électronique AP est adaptée pour établir des transactions de paiement selon au moins un mode de transaction de paiement. Par mode de transaction de paiement, on entend ici la technologie de paiement électronique utilisée par le terminal de communication et le dispositif de paiement électronique 11, et éventuellement un serveur de paiement, pour communiquer les données relatives à la transaction et les données bancaires de l'utilisateur du terminal de communication. Une telle technologie de paiement est par exemple une technologie de paiement sans contact NFC, ou une technologie de paiement par QRcodes.

Pour que le terminal de communication 12 puisse réaliser des transactions de paiement avec un dispositif de paiement 11, des données d'authentification et des données bancaires de l'utilisateur ont été enregistrées au sein du terminal de communication 12, par exemple dans la carte SIM du terminal pour chiffrer et sécuriser de telles données, par le fournisseur de l'application de paiement.

Selon un premier exemple, l'application de paiement électronique AP du terminal de communication 12 utilise la technologie de paiement par NFC pour réaliser des transactions de paiement. Selon cet exemple, le terminal de communication 12 comprend donc un module d'émission-réception NFC apte à communiquer avec l'application de paiement AP.

Le dispositif de paiement 11 est adapté à réaliser des transactions de paiement selon la technologie de paiement NFC. Une telle technologie de paiement NFC constitue un premier mode de transaction de paiement, au sens de l'invention. Une telle technologie de paiement NFC utilise un canal de communication établi sur une courte portée (13), de l'ordre d'une dizaine de centimètres. Selon cette technologie de paiement, pour réaliser la transaction de paiement, le commerçant initie sur le dispositif de paiement 11 la transaction en entrant les données relatives à la transaction, par exemple le montant du paiement à effectuer. Le dispositif de paiement électronique 11 génère un signal selon un protocole NFC et attend de recevoir les données bancaires de l'utilisateur pour pouvoir compléter la transaction de paiement. L'utilisateur du terminal de communication déclenche sur son terminal de communication 12 l'application de paiement AP et approche le terminal de communication 12 du dispositif de paiement 11. Lorsque le terminal de communication 12 et le dispositif de paiement 11 sont suffisamment proches, de l'ordre de 5 à 10 cm, l'application de paiement AP détecte via le module d'émission-réception NFC, le signal NFC émis par le dispositif de paiement 11. Suite à cette détection, l'application de paiement AP commande la transmission via le module d'émission-réception NFC du terminal de communication 12, des données bancaires mémorisées dans le terminal de communication 12, au dispositif de paiement 11. Le dispositif de paiement 11 reçoit les données bancaires de l'utilisateur et les mémorise avec les données relatives à la transaction de paiement. Le dispositif de paiement 11 communique ensuite avec un serveur de paiement d'une institution financière pour transmettre les données de la transaction de paiement et obtenir le paiement effectif, c'est-à-dire pour que le compte bancaire de l'utilisateur soit débité du montant de la transaction et le compte bancaire du commerçant soit crédité du montant de la transaction.

Avant de clore la transaction avec le terminal de communication et d'en demander le paiement à l'institution financière, le dispositif de paiement 11 peut éventuellement demander à l'institution financière d'authentifier l'utilisateur du terminal de communication 11 afin de garantir la validité de la transaction de paiement.

Selon un deuxième exemple, l'application de paiement électronique AP du terminal de communication 12 utilise la technologie de paiement par QR codes pour réaliser des transactions de paiement. Selon cet exemple, le terminal de communication 12 comprend un module de capture de code QR, par exemple une caméra. L'application de paiement AP est apte à communiquer avec la caméra du terminal de communication 12 pour obtenir l'image du QR code capturé et à traiter une telle image pour obtenir les informations codées que le code QR contient.

Le dispositif de paiement 11 est également adapté à réaliser des transactions de paiement selon la technologie de paiement par QR codes. Une telle technologie de paiement par QR codes constitue un deuxième mode de transaction de paiement, au sens de l'invention.

Un QR code est un code visuel 2D (en deux dimensions) comprenant des pixels noirs et blancs agencés dans un cadre défini, en général un carré. L'agencement des pixels noirs et blancs dans le cadre définit l'information que contient le code. Un code QR procure l'avantage que les informations qu'il contient peuvent être rapidement décodées après que le code a été lu par un lecteur de code, ou une caméra.

Selon la technologie de paiement basée sur l'utilisation de code QR, suite à l'initialisation d'une transaction de paiement par le commerçant sur le dispositif de paiement électronique 11, le dispositif de paiement électronique 11 génère un code QR comprenant des données d'identification de la transaction à réaliser, des données d'identification du commerçant ou du dispositif de paiement et des données permettant à un terminal de communication d'accéder à un serveur de paiement via le réseau de communication 10.

Pour réaliser la transaction de paiement, l'application de paiement AP du terminal de communication 12 scanne le QR code affiché sur le dispositif de paiement 11, via la caméra du terminal de communication 12. Puis, l'application de paiement AP du terminal de communication 12 décode le code QR scanné et extrait des données décodées: l'adresse du serveur de paiement (non représenté) et les données relatives à la transaction à réaliser (montant de la transaction, identification du dispositif de paiement et/ou du commerçant).

Puis, l'application de paiement AP du terminal de communication 12 communique avec le serveur de paiement grâce à l'adresse extraite. Au cours de cette communication, l'application de paiement AP du terminal de communication 12 fournit au serveur de paiement les données extraites relatives à la transaction et les données bancaires de l'utilisateur du terminal de communication 12 mémorisées dans le terminal de communications 12. Le serveur de paiement renvoie les données bancaires reçues et les données relatives à la transaction au dispositif de paiement 11 pour que le dispositif de paiement enregistre la transaction de paiement avec les données bancaires relatives à l'utilisateur du terminal de communication 12.

Eventuellement, selon l'un ou l'autre des exemples décrits ci-dessus, l'application de paiement AP du terminal de communication 12 peut demander à l'utilisateur d'entrer un code, par exemple un code PIN, afin d'autoriser la transaction de paiement, avant d'envoyer les données bancaires de l'utilisateur.

La figure 2 illustre les principales étapes du procédé de fourniture de données relatives à une transaction de paiement selon un mode particulier de réalisation de l'invention. Dans l'art antérieur, lorsque le commerçant initie la transaction de paiement sur le dispositif de paiement 11, le dispositif de paiement 11 ne génère qu'un seul signal destiné à au terminal de communication 12. Le signal généré est fonction du mode de transaction qui a été sélectionné par le commerçant ou qui a été sélectionné par défaut par le fournisseur du dispositif de paiement 11. Dans le mode de réalisation décrit ici, le terminal de communication 12 ne supporte qu'un mode de transaction de paiement.

Selon le mode particulier de réalisation décrit ici, lors d'une étape E20, le commerçant initie sur le dispositif de paiement 11, la transaction de paiement à réaliser avec le terminal de communication 12.

Suite à l'initialisation à l'étape E20, lors d'une étape E21, le dispositif de paiement 11 génère un signal NFC comprenant une information permettant d'établir la transaction de paiement via un canal de communication courte portée NFC 13. Par exemple, le signal généré comprend une donnée d'authentification permettant au terminal de communication 12 de s'authentifier auprès du dispositif de paiement 11 (ou de transmettre des données de paiement de type carte bancaire).

Suite à l'initialisation à l'étape E20, lors d'une étape E22, le dispositif de paiement 11 génère également un signal QR code. Le signal QR code comprend notamment une information permettant d'établir la transaction via le réseau de communication 10. Le signal QR code comprend l'adresse du serveur de paiement auprès duquel le terminal de communication 12 doit s'authentifier, et des données relatives à la transaction de paiement permettant au terminal de communication 12 de s'authentifier (telles des données relatives au montant de la transaction, des données de compte bancaire).

Lors d'une étape E23, le dispositif de paiement 11 émet via le canal de communication NFC 13 le signal généré lors de l'étape E21. Concomitamment à l'étape E23, lors d'une étape E24, le dispositif de paiement 11 émet le code QR généré lors de l'étape E22. Lors de l'étape E24, le dispositif de paiement 11 affiche sur son écran le code QR généré.

Selon un premier exemple, lorsque l'application de paiement AP du terminal de communication 12 supporte le mode de transaction de paiement NFC, l'utilisateur du terminal de communication approche le terminal de communication 12 du dispositif de paiement 11 afin de compléter la transaction de paiement. Le terminal de communication 12 détecte le signal NFC émis lors de l'étape E23, extrait la donnée d'authentification de la transaction du signal NFC et émet vers le dispositif de paiement 11 la donnée d'authentification extraite et les données bancaires de l'utilisateur.

Lors d'une étape E25, le dispositif de paiement 11 reçoit ces informations sur le canal de communication NFC.

Alternativement, le terminal de communication peut également se connecter à un serveur de paiement dont l'adresse est indiquée dans le signal NFC et effectuer le paiement à partir de ce serveur. Lors de l'étape E25, le dispositif de paiement 11 reçoit alors une confirmation de paiement en provenance du serveur de paiement.

Selon un deuxième exemple, lorsque l'application de paiement AP du terminal de communication 12 supporte le mode de transaction de paiement par QRcode, l'utilisateur du terminal de communication positionne le terminal de communication 12 pour capturer le QR code affiché par le dispositif de paiement 11. Le terminal de communication 12 capture (c'est-à-dire scanne ou flashe) le code QR affiché lors de l'étape E24. Le terminal de communication 12 décode le code QR scanné et extrait des données décodées la donnée d'authentification de la transaction et l'adresse du serveur de paiement. Le terminal de communication 12 communique, via le réseau de communication 10, avec le serveur de paiement et transmet au serveur de paiement la donnée d'authentification extraite et les données bancaires de l'utilisateur. Le serveur de paiement effectue alors la transaction de paiement (avec les données qu'il reçoit de la part du terminal de communication, par exemple des données de carte de paiement) et transmet, via le réseau de communication 10, une confirmation de paiement au dispositif de paiement 11.

Lors de l'étape E25, le dispositif de paiement 11 reçoit donc en provenance du serveur de paiement, via le réseau de communication 10, une confirmation de paiement (comprenant la donnée d'authentification précédemment transmise).

Lors de l'étape E26, le dispositif de paiement 11 authentifie la confirmation de paiement reçue en vérifiant que la donnée d'authentification reçue correspond bien à la donnée d'authentification émise via le signal NFC ou le signal QR code pour la transaction initialisée lors de l'étape E20. Après l'authentification, le dispositif de paiement 11 enregistre les informations reçues lors de l'étape E25 afin de compléter la transaction de paiement.

Lorsque la transaction de paiement est complétée, le dispositif de paiement 11 arrête l'émission du signal NFC et l'affichage du code QR.

Le procédé de l'invention a été décrit dans le cas où le dispositif de paiement supporte la technologie de paiement NFC et la technologie de paiement par QR code. D'autres modes de réalisation sont possibles, par exemple lorsque le dispositif de paiement supporte une technologie de paiement par ultra-son. Dans cet exemple, le signal ultra-son est transmis, par exemple avec une composante voix supplémentaire, en parallèle du signal NFC par exemple, afin d'avertir l'utilisateur (et le terminal de communication) que le dispositif de paiement 11 supporte la technologie de paiement par NFC.

La figure 3 représente un signal relatif à un mode de transaction de paiement émis selon un mode particulier de réalisation de l'invention. La figure 3 représente un code QR généré par exemple par le dispositif de paiement 11 lors de l'étape E22 décrite en relation avec la figure 2 et émis par le dispositif de paiement 11 lors de l'étape E24.

Selon le mode particulier de réalisation décrit ici, le code QR comprend un logo de la technologie NFC. Un tel code QR comprend ainsi une information représentative de l'émission du signal NFC par le dispositif de paiement 11. Le code QR reste parfaitement lisible et interprétable par la caméra du terminal de communication 12 et l'application de paiement AP lorsque l'application de paiement AP supporte la technologie de paiement par QRcode.

Le code QR de la figure 3 permet d'avertir l'utilisateur que le dispositif de paiement 11 est multimodal et supporte à la fois la technologie de paiement NFC et la technologie de paiement par QR code. Par exemple, lorsque terminal de communication 12 de l'utilisateur supporte la technologie de paiement NFC, mais pas la technologie de paiement par QR code, l'utilisateur peut renoncer à réaliser la transaction de paiement via son terminal de communication 12 car l'affichage d'un code QR par le dispositif de paiement 11 lui indique que la technologie de paiement par QR code est supporté mais l'utilisateur n'a aucune indication en ce qui concerne la technologie de paiement NFC.

Le QR code comprenant une information représentative de l'émission du signal NFC émis par le dispositif de paiement 11, et tel que représenté en figure 3, permet d'avertir l'utilisateur (ou directement le terminal de communication) que le dispositif de paiement 11 est multimodal et supporte deux modes de transaction de paiement. Ainsi, l'utilisateur du terminal de communication 12 est incité à utiliser la technologie de paiement NFC même si un QR code est affiché par le dispositif de paiement 11.

Selon ce mode particulier de réalisation de l'invention, après l'affichage d'un tel code QR lors de l'étape E24, l'utilisateur du terminal de communication 12 approche son terminal de communication 12 du dispositif de paiement 11 afin de compléter la transaction de paiement initialisée tel que décrit en relation avec la figure 2.

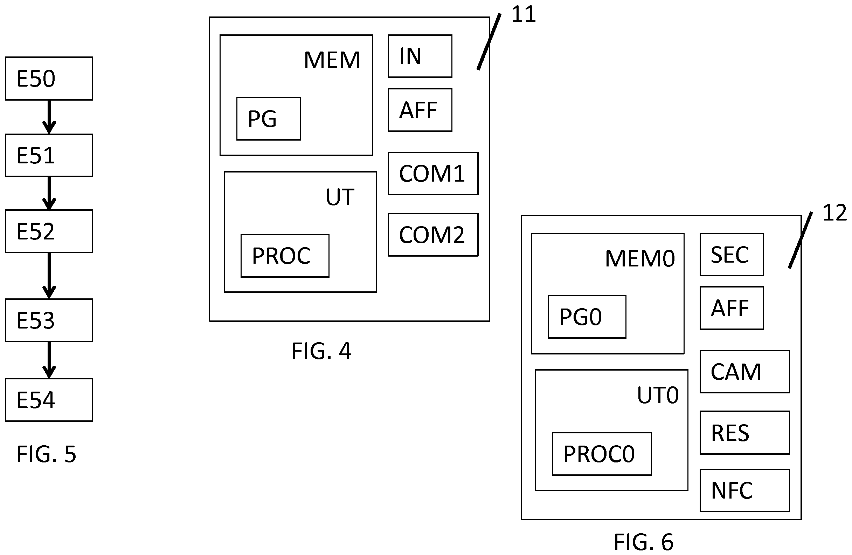

La figure 4 présente la structure simplifiée d'un dispositif de paiement 11 selon un mode particulier de réalisation de l'invention. Un tel dispositif de paiement 11 comprend une mémoire MEM, une unité de traitement UT, équipée par exemple d'un microprocesseur PROC, et pilotée par le programme d'ordinateur PG stocké en mémoire MEM. Le programme d'ordinateur PG comprend des instructions pour mettre en œuvre les étapes du procédé de fourniture tel que décrit en relation avec la figure 2, lorsque le programme est exécuté par le processeur PROC.

A l'initialisation, les instructions de code du programme d'ordinateur PG sont par exemple chargées dans une mémoire RAM avant d'être exécutées par le processeur PROC. Le processeur PROC de l'unité de traitement UT met notamment en œuvre les étapes du procédé de fourniture décrit en relation avec la figure 2, selon les instructions du programme d'ordinateur PG.

Pour cela, le dispositif de paiement 11 comprend une interface COM1 d'émission-réception NFC apte à émettre un signal NFC sur commande du processeur PROC de l'unité de traitement UT selon les instructions du programme d'ordinateur PG.

Le dispositif de paiement 11 comprend également une interface COM2 apte à communiquer avec le réseau de communication 10, et notamment à recevoir des données relatives à des transactions de paiement.

Le dispositif de paiement 11 comprend un écran AFF apte à afficher un code visuel 2D, tel qu'un code QR. Classiquement, le dispositif de paiement 11 comprend également une interface IN d'interaction utilisateur apte à recevoir des commandes du commerçant et à les transmettre au processeur PROC de l'unité de traitement UT. Une telle interface est par exemple un clavier, un écran tactile. L'interface COM1, l'interface COM2, l'écran AFF et l'interface IN sont pilotés par le processeur PROC de l'unité de traitement PG selon les instructions du programme d'ordinateur PG.

Selon un mode particulier de réalisation de l'invention, le dispositif de paiement 11 est compris dans un terminal de paiement.

La figure 5 présente les principales étapes du procédé de sélection d'un mode de transaction de paiement selon un mode particulier de réalisation de l'invention. Le terminal de communication 12 est apte à réaliser une transaction de paiement avec le dispositif de paiement 11 selon deux modes de transaction de paiement distincts, un mode de transaction utilisant la technologie de paiement NFC et un mode de transaction utilisant la technologie de paiement par QR code.

Lors d'une étape E50, le terminal de communication 12 reçoit un signal relatif à la transaction de paiement émis par le dispositif de paiement 11. Un tel signal correspond à une image d'un QR code scanné par la caméra du terminal de communication 12. Selon un autre exemple non couvert par l'invention revendiquée lorsque le dispositif de paiement est adapté à réaliser des transactions de paiements via une technologie basée sur les ultra-sons, le signal correspond à un signal ultrasonore émis par le dispositif de paiement.

Lors d'une étape E51, le terminal de communication obtient à partir du signal reçu lors de l'étape E50, une information indiquant au terminal de communication que la transaction initiée par le dispositif de paiement 11 peut être réalisé selon un premier mode de transaction de paiement. Le terminal de communication décode le QR code et extrait à partir des données décodées la donnée d'authentification de la transaction et l'adresse du serveur de paiement.

Lors d'une étape E52, le terminal de communication obtient une deuxième information indiquant un deuxième mode de transaction de paiement possible pour effectuer la transaction de paiement avec le dispositif de paiement 11.

Selon une variante, cette information est codée dans le QR code reçu lors de l'étape E50. Le terminal de communication l'extrait alors des données décodées du QR code.

Selon une autre variante, le QR code comprend une information visuelle interprétable par l'utilisateur du terminal de communication 12. Une telle information visuelle indique que le dispositif de paiement 11 supporte un autre mode de transaction de paiement. Par exemple, l'information visuelle est comprise dans un QR code tel qu'illustré en figure 3. L'information visuelle du QR code indique qu'un mode de transaction de paiement par NFC est possible.

Selon un exemple de cette variante, l'utilisateur active alors sur son terminal de communication, l'application de paiement relative au mode de transaction de paiement par NFC.

Selon un autre exemple de cette variante, le terminal de communication 12 analyse l'image du QR code scanné lors de l'étape E50 et extrait l'information visuelle comprise dans le QR code. Le terminal de communication 12 détecte alors que cette information visuelle correspond à un logo de la technologie NFC, par exemple par comparaison de l'information visuelle extraire et d'images du logo mémorisées dans le terminal de communication 12. Le terminal de communication 12 active alors l'application de paiement relative au mode de transaction de paiement par NFC et indique à l'utilisateur que ce mode de paiement est activé.

Selon une autre variante, le terminal de communication 12 est suffisamment proche du dispositif de paiement 11 pour détecter le signal NFC émis par le dispositif de paiement 11 lors de l'étape E23 décrite en relation avec la figure 2. Dans cette variante, la deuxième information indiquant un deuxième mode de transaction de paiement possible est obtenue à partir du signal NFC reçu par le terminal de communication 12.

Lors d'une étape E53, le terminal de communication 12 sélectionne un mode de transaction de paiement à utiliser pour effectuer la transaction de paiement avec le dispositif de paiement 11. La sélection est effectuée parmi le mode de transaction de paiement par QR code et le mode de transaction de paiement par NFC qui ont été détectés respectivement lors des étapes E51 et E52. Une telle sélection d'un mode de transaction de paiement est effectuée à partir d'au moins une caractéristique dudit terminal de communication 12 ou d'une caractéristique de la transaction de paiement. Par exemple, le mode de transaction de paiement par NFC est sélectionné si le montant de la transaction est inférieur à 20 euros, et le mode de transaction de paiement par QR code est sélectionné si le montant de la transaction est supérieur ou égal à 20 euros.

Selon un autre exemple, le mode de transaction de paiement par NFC est sélectionné en fonction du réseau de communication auquel, le terminal de communication 12 est connecté. Par exemple, si le terminal de communication 12 est connecté à un réseau 2G, le terminal de communication 12 sélectionne un mode de transaction de paiement par NFC. Si le terminal de communication 12 est connecté à un réseau 3G/4G, le terminal de communication 12 sélectionne un mode de transaction de paiement par QR code.

Suite à la sélection d'un mode de transaction de paiement, le terminal de communication 12 envoie lors d'une étape E54, un signal de réponse destiné au dispositif de paiement 11, via le canal de communication associé au mode de transaction de paiement sélectionné.

Pour cela, lorsque le mode de transaction de paiement sélectionné est un mode de transaction par NFC, si le terminal de communication 12 n'a pas encore détecté le signal NFC émis par le dispositif de paiement 11, une information visuelle est affichée par le terminal de communication 12 à l'utilisateur pour que l'utilisateur du terminal de communication 12 approche le terminal de communication 12 du dispositif de paiement 11. Puis, lorsque le signal émis par le dispositif de paiement 11 lors de l'étape E23 est détecté, le terminal de communication 12 extrait du signal NFC la donnée d'authentification de la transaction et émet vers le dispositif de paiement 11 la donnée d'authentification extraite et les données bancaires de l'utilisateur via un canal NFC.

Lorsque le mode de transaction de paiement sélectionné est un mode de transaction par QR code, lors de l'étape E54, le terminal de communication 12 communique, via le réseau de communication 10, avec le serveur de paiement et transmet au serveur de paiement la donnée d'authentification extraite et les données bancaires de l'utilisateur. Le serveur de paiement transmet, via le réseau de communication 10, ces informations au dispositif de paiement 11.

La figure 6 présente la structure simplifiée d'un terminal de communication selon un mode de réalisation de l'invention. Un tel terminal de communication 12 comprend une mémoire MEM0, une unité de traitement UT0, équipée par exemple d'un microprocesseur PROCO, et pilotée par le programme d'ordinateur PG0 stocké en mémoire MEM0. Le programme d'ordinateur PG0 comprend des instructions pour mettre en œuvre les étapes du procédé de sélection tel que décrit en relation avec la figure 5, lorsque le programme est exécuté par le processeur PROCO.

A l'initialisation, les instructions de code du programme d'ordinateur PG0 sont par exemple chargées dans une mémoire RAM avant d'être exécutées par le processeur PROCO. Le processeur PROCO de l'unité de traitement UT0 met notamment en œuvre les étapes du procédé de sélection décrit en relation avec la figure 5, selon les instructions du programme d'ordinateur PG0.

Pour cela, le terminal de communication 12 comprend une interface NFC d'émission-réception NFC apte à émettre ou recevoir un signal NFC sur commande du processeur PROCO de l'unité de traitement UT0 selon les instructions du programme d'ordinateur PG0.

Le terminal de communication 12 comprend également une interface RES apte à communiquer avec le réseau de communication 10, et notamment à émettre des données relatives à des transactions de paiement vers un serveur de paiement du réseau de communication 10.

Le terminal de communication 12 comprend un module CAM de capture visuel, tel qu'une caméra ou un lecteur de code-barres, à capturer un code visuel 2D, tel qu'un code QR.

Classiquement, le terminal de communication 12 comprend également une interface IN d'interaction utilisateur apte à recevoir des commandes de l'utilisateur, et à les transmettre au processeur PROCO de l'unité de traitement UT0. Une telle interface est par exemple un clavier, un écran tactile. Eventuellement, le terminal de communication 12 comprend également un écran.

Le terminal de communication 12 comprend également un module de stockage sécurisé SEC, par exemple une carte SIM, apte à enregistrer des données bancaires de l'utilisateur du terminal de communication 12. La mémoire MEM0 comprend également au moins une application de paiement AP sous forme logicielle. L'application de paiement AP est adaptée à communiquer avec le module de stockage sécurisé SEC pour obtenir les données bancaires lors d'une transaction de paiement. L'interface NFC et l'interface RES sont pilotées par le processeur PROCO de l'unité de traitement PG0 selon les instructions du programme d'ordinateur PG0.

Le terminal de communication 12 est par exemple un téléphone mobile, un smartphone, une tablette...

## Revendications

1. Procédé de fourniture de données relatives à une transaction de paiement, à un terminal de communication, mis en œuvre par un dispositif de paiement apte à effectuer une transaction de paiement avec ledit terminal de communication, selon deux modes de transaction de paiement distincts, les modes de transaction distincts étant un mode de transaction par NFC et un mode de transaction par QR code, le procédé comprenant :
- une étape de génération (E21) d'un premier signal NFC relatif audit mode de transaction par NFC ledit premier signal NFC comprenant au moins une information permettant d'établir la transaction de paiement via un premier canal de communication,
- une étape d'émission (E23) du premier signal NFC, via ledit premier canal de communication, le procédé est **caractérisé en ce qu'**il comprend les étapes suivantes :
- génération (E22) d'au moins un deuxième signal relatif audit mode de transaction par QR code ledit deuxième signal étant un QR code comprenant au moins une information permettant d'établir la transaction de paiement via un deuxième canal de communication, ledit QR code comprenant une information visuelle représentative de l'émission dudit premier signal NFC
- émission (E24) du deuxième signal, par affichage dudit QR code sur un écran du dispositif de paiement simultanément à l'émission du premier signal NFC.

2. Procédé de fourniture selon la revendication 1, comprenant en outre une étape de réception d'un signal de réponse via le premier ou le deuxième canal de communication.

3. Dispositif de paiement apte à réaliser une transaction de paiement avec un terminal de communication selon deux modes de transaction de paiement distincts, les modes de transaction distincts étant un mode de transaction par NFC et un mode de transaction par QR code, le dispositif comprenant:
- un premier module de génération de signal adapté pour générer un premier signal NFC relatif audit mode de transaction par NFC ledit premier signal NFC comprenant au moins une information permettant d'établir la transaction via un premier canal de communication,
- un premier module d'émission adapté pour émettre ledit premier signal NFC, via ledit premier canal de communication,
- au moins un deuxième module de génération de signal adapté pour générer un deuxième signal relatif audit mode de transaction par QR code ledit deuxième signal étant un QR code comprenant au moins une information permettant d'établir la transaction via un deuxième canal de communication, ledit QR code comprenant une information visuelle représentative de l'émission dudit premier signal NFC,
- un deuxième module d'émission adapté pour émettre ledit deuxième signal, par affichage dudit QR code sur un écran du dispositif de paiement, ledit deuxième module d'émission étant activé simultanément audit premier module d'émission du premier signal NFC.

4. Terminal de paiement comprenant un dispositif selon la revendication 3.

5. Programme d'ordinateur comportant des instructions pour la mise en œuvre du procédé de fourniture de données relatives à une transaction de paiement selon l'une quelconque des revendications 1 et 2, lorsque ledit programme est exécuté par un processeur du dispositif de la revendication 3.

6. Procédé de sélection d'un mode de transaction de paiement pour réaliser une transaction de paiement initiée par un dispositif de paiement, le procédé étant mis en œuvre par un terminal de communication, le procédé comprend les étapes suivantes :
- réception d'au moins un signal relatif à la transaction de paiement en provenance du dispositif de paiement, ledit dispositif de paiement étant apte à mettre en œuvre deux modes de transaction de paiement, les modes de transaction étant un mode de transaction par NFC et un mode de transaction par QR code, ledit signal reçu étant une image d'un QR code,
- obtention par décodage et extraction dudit QR code, d'au moins une première information indiquant un premier mode de transaction de paiement possible pour effectuer la transaction de paiement avec le dispositif de paiement,
- obtention, à partir d'une information visuelle comprise dans ledit QR code, d'au moins une deuxième information représentative de l'émission d'un signal NFC par le dispositif de paiement indiquant un deuxième mode de transaction de paiement possible pour effectuer la transaction de paiement avec le dispositif de paiement,
- sélection d'un mode de transaction de paiement à utiliser pour effectuer la transaction de paiement avec le dispositif de paiement, parmi le premier et le deuxième mode de transaction de paiement, à partir d'au moins une caractéristique dudit terminal de communication ou d'une caractéristique de la transaction de paiement,
- envoi d'un signal de réponse via un canal de communication associé au mode de transaction de paiement sélectionné, à destination du dispositif de paiement.

7. Procédé de sélection selon la revendication 6 dans lequel la caractéristique de la transaction de paiement correspond à un montant de la transaction.

8. Terminal de communication adapté pour sélectionner un mode de transaction de paiement pour réaliser une transaction de paiement initiée par un dispositif de paiement, le terminal de communication comprenant :
- des moyens pour recevoir au moins un signal relatif à la transaction de paiement en provenance du dispositif de paiement, ledit dispositif de paiement étant apte à mettre en œuvre deux modes de transaction de paiement, les modes de transaction étant un mode de transaction par NFC et un mode de transaction par QR code, ledit signal reçu étant une image d'un QR code,
- des moyens pour obtenir, par décodage et extraction dudit QR code, au moins une première information indiquant un premier mode de transaction de paiement possible pour effectuer la transaction de paiement avec le dispositif de paiement,
- des moyens pour obtenir, à partir d'une information visuelle comprise dans ledit QR code, au moins une deuxième information représentative de l'émission d'un signal NFC par le dispositif de paiement indiquant un deuxième mode de transaction de paiement possible pour effectuer la transaction de paiement avec le dispositif de paiement,
- des moyens de sélection d'un mode de transaction de paiement à utiliser pour effectuer la transaction de paiement avec le dispositif de paiement, parmi le premier et le deuxième mode de transaction de paiement, à partir d'au moins une caractéristique dudit terminal de communication ou d'une caractéristique de la transaction de paiement,
- des moyens pour envoyer un signal de réponse via un canal de communication associé au mode de transaction de paiement sélectionné, à destination du dispositif de paiement.

9. Programme d'ordinateur comportant des instructions pour la mise en œuvre du procédé de sélection d'un mode de transaction de paiement pour réaliser une transaction de paiement initiée par un dispositif de paiement, selon l'une quelconque des revendications 6 à 7, lorsque ledit programme est exécuté par un processeur du terminal de communication selon la revendication 8.

## Patentansprüche

1. Verfahren zum Bereitstellen von Daten bezüglich einer Zahlungstransaktion an einem Kommunikationsterminal, das von einer Zahlungsvorrichtung durchgeführt wird, die in der Lage ist, eine Zahlungstransaktion mit dem Kommunikationsterminal gemäß zwei unterschiedlichen Zahlungstransaktionsmodi durchzuführen, wobei die unterschiedlichen Transaktionsmodi ein NFC-Transaktionsmodus und ein QR-Code-Transaktionsmodus sind, wobei das Verfahren umfasst:
- einen Schritt zum Erzeugen (E21) eines ersten NFC-Signals, das sich auf den NFC-Transaktionsmodus bezieht, wobei das erste NFC-Signal mindestens eine Information enthält, die es ermöglicht, die Zahlungstransaktion über einen ersten Kommunikationskanal herzustellen,
- einen Schritt des Sendens (E23) des ersten NFC-Signals, über den ersten Kommunikationskanal, wobei das Verfahren **dadurch gekennzeichnet ist, dass** es die folgenden Schritte umfasst:
- Erzeugen (E22) mindestens eines zweiten Signals in Bezug auf den Transaktionsmodus per QR-Code, wobei das zweite Signal ein QR-Code ist, der mindestens eine Information enthält, die es ermöglicht, die Zahlungstransaktion über einen zweiten Kommunikationskanal herzustellen, wobei der QR-Code eine visuelle Information enthält, die für die Aussendung des ersten NFC-Signals repräsentativ ist
- Aussenden (E24) des zweiten Signals durch Anzeigen des QR-Codes auf einem Bildschirm der Zahlungsvorrichtung gleichzeitig mit dem Aussenden des ersten NFC-Signals.

2. Verfahren zum Bereitstellen nach Anspruch 1, das außerdem einen Schritt des Empfangens eines Antwortsignals über den ersten oder zweiten Kommunikationskanal umfasst.

3. Zahlungsvorrichtung, die geeignet ist, eine Zahlungstransaktion mit einem Kommunikationsterminal gemäß zwei unterschiedlichen Zahlungstransaktionsmodi durchzuführen, wobei die unterschiedlichen Transaktionsmodi ein NFC-Transaktionsmodus und ein QR-Code-Transaktionsmodus sind, wobei die Vorrichtung umfasst:
- ein erstes Signalerzeugungsmodul, das dazu geeignet ist, ein erstes NFC-Signal zu erzeugen, das sich auf den NFC-Transaktionsmodus bezieht, wobei das erste NFC-Signal mindestens eine Information enthält, die es ermöglicht, die Transaktion über einen ersten Kommunikationskanal herzustellen,
- ein erstes Sendemodul, das so beschaffen ist, dass es das erste NFC-Signal über den ersten Kommunikationskanal sendet,
- mindestens ein zweites Signalerzeugungsmodul, das dazu geeignet ist, ein zweites Signal zu erzeugen, das sich auf den Transaktionsmodus per QR-Code bezieht, wobei das zweite Signal ein QR-Code ist, der mindestens eine Information enthält, die es ermöglicht, die Transaktion über einen zweiten Kommunikationskanal herzustellen, wobei der QR-Code eine visuelle Information enthält, die für die Aussendung des ersten NFC-Signals repräsentativ ist,
- ein zweites Sendemodul, das dazu geeignet ist, das zweite Signal durch Anzeige des QR-Codes auf einem Bildschirm der Zahlungsvorrichtung zu senden, wobei das zweite Sendemodul gleichzeitig mit dem ersten Sendemodul für das erste NFC-Signal aktiviert wird.

4. Zahlungsterminal mit einer Zahlungsvorrichtung nach Anspruch 3.

5. Computerprogramm mit Anweisungen zur Durchführung des Verfahrens zum Bereitstellen von Daten bezüglich einer Zahlungstransaktion nach einem der Ansprüche 1 und 2, wenn das Programm von einem Prozessor der Vorrichtung nach Anspruch 3 ausgeführt wird.

6. Verfahren zum Auswählen eines Zahlungstransaktionsmodus zum Durchführen einer Zahlungstransaktion, die von einer Zahlungsvorrichtung eingeleitet wird, wobei das Verfahren von einem Kommunikationsterminal implementiert wird, wobei das Verfahren die folgenden Schritte umfasst:
- Empfangen mindestens eines Signals bezüglich der Zahlungstransaktion von der Zahlungsvorrichtung, wobei die Zahlungsvorrichtung in der Lage ist, zwei Zahlungstransaktionsmodi zu implementieren, wobei die Transaktionsmodi ein NFC-Transaktionsmodus und ein QR-Code-Transaktionsmodus sind, wobei das empfangene Signal ein Bild eines QR-Codes ist,
- Erhalten durch Decodieren und Extrahieren des QR-Codes mindestens einer ersten Information, die eine erste mögliche Art der Zahlungstransaktion angibt, um die Zahlungstransaktion mit der Zahlungsvorrichtung durchzuführen,
- Erhalten, aus einer visuellen Information, die in dem QR-Code enthalten ist, mindestens einer zweiten Information, die repräsentativ für das Senden eines NFC-Signals durch die Zahlungsvorrichtung ist, das eine zweite mögliche Zahlungs-Transaktionsart anzeigt, um die Zahlungstransaktion mit der Zahlungsvorrichtung durchzuführen,
- Auswählen eines Zahlungstransaktionsmodus, der zum Durchführen der Zahlungstransaktion mit der Zahlungsvorrichtung verwendet werden soll, aus dem ersten und dem zweiten Zahlungstransaktionsmodus anhand mindestens eines Merkmals des Kommunikationsterminals oder eines Merkmals der Zahlungstransaktion,
- Senden eines Antwortsignals über einen Kommunikationskanal, der dem ausgewählten Zahlungstransaktionsmodus zugeordnet ist, an die Zahlungsvorrichtung.

7. Verfahren zum Auswählen nach Anspruch 6, wobei das Merkmal der Zahlungstransaktion einem Betrag der Transaktion entspricht.

8. Kommunikationsterminal, das dazu geeignet ist, einen Zahlungstransaktionsmodus auszuwählen, um eine Zahlungstransaktion durchzuführen, die von einer Zahlungsvorrichtung eingeleitet wird, wobei das Kommunikationsterminal Folgendes umfasst:
- Mittel zum Empfangen mindestens eines Signals bezüglich der Zahlungstransaktion von der Zahlungsvorrichtung, wobei die Zahlungsvorrichtung geeignet ist, zwei Zahlungstransaktionsmodi zu implementieren, wobei die Transaktionsmodi ein NFC-Transaktionsmodus und ein QR-Code-Transaktionsmodus sind, wobei das empfangene Signal ein Bild eines QR-Codes ist,
- Mittel, um durch Decodieren und Extrahieren des QR-Codes mindestens eine erste Information zu erhalten, die eine erste mögliche Art der Zahlungstransaktion angibt, um die Zahlungstransaktion mit der Zahlungsvorrichtung durchzuführen,
- Mittel, um aus einer in dem QR-Code enthaltenen visuellen Information mindestens eine zweite Information zu erhalten, die repräsentativ für das Senden eines NFC-Signals durch die Zahlungsvorrichtung ist, das eine zweite mögliche Art der Zahlungstransaktion anzeigt, um die Zahlungstransaktion mit der Zahlungsvorrichtung durchzuführen,
- Mittel zum Auswählen eines Zahlungstransaktionsmodus, der zum Durchführen der Zahlungstransaktion mit der Zahlungsvorrichtung verwendet werden soll, aus dem ersten und dem zweiten Zahlungstransaktionsmodus anhand mindestens eines Merkmals des Kommunikationsterminals oder eines Merkmals der Zahlungstransaktion,
- Mittel zum Senden eines Antwortsignals über einen Kommunikationskanal, der dem ausgewählten Zahlungstransaktionsmodus zugeordnet ist, an die Zahlungsvorrichtung.

9. Computerprogramm mit Anweisungen zur Durchführung des Verfahrens zum Auswählen eines Zahlungstransaktionsmodus zum Durchführen einer Zahlungstransaktion, die von einer Zahlungsvorrichtung eingeleitet wird, nach einem der Ansprüche 6 bis 7, wenn das Programm von einem Prozessor des Kommunikationsterminals nach Anspruch 8 ausgeführt wird.

## Claims

1. A method for supplying data relating to a payment transaction, to a communication terminal, implemented by a payment device capable of carrying out a payment transaction with said communication terminal, according to two distinct payment transaction modes, the distinct transaction modes being an NFC transaction mode and a QR code transaction mode, the method comprising:
- a step for generating (E21) a first NFC signal relating to said NFC transaction mode, said first NFC signal comprising at least one piece of information making it possible to set up the payment transaction via a first communication channel,
- a step of transmitting (E23) the first NFC signal, via said first communication channel, the method is **characterized in that** it comprises the following steps:
- generation (E22) of at least a second signal relating to said QR code transaction mode, said second signal being a QR code comprising at least information making it possible to set up the payment transaction via a second communication channel, said QR code comprising visual information representative of the transmission of said first NFC signal
- emission (E24) of the second signal, by displaying said QR code on a screen of the payment device simultaneously with the emission of the first NFC signal.

2. A method for supplying according to claim 1, further comprising a step of receiving a response signal via the first or second communication channel.

3. A payment device capable of carrying out a payment transaction with a communication terminal according to two distinct payment transaction modes, the distinct transaction modes being an NFC transaction mode and a QR code transaction mode, the device comprising:
- a first signal generation module adapted to generate a first NFC signal relating to said NFC transaction mode, said first NFC signal comprising at least one piece of information making it possible to set up the payment transaction via a first communication channel,
- a first transmission module adapted to transmit said first NFC signal, via said first communication channel,
- at least one second signal generation module adapted to generate a second signal relating to said QR code transaction mode, said second signal being a QR code comprising at least one piece of information making it possible to set up the payment transaction via a second communication channel, said QR code comprising visual information representative of the transmission of said first NFC signal,
- a second transmission module adapted to transmit said second signal, by displaying said QR code on a screen of the payment device, said second transmission module being activated simultaneously with said first transmission module of the first NFC signal.

4. A payment terminal comprising a device according to claim 3.

5. A computer program comprising instructions for implementing the method for supplying data relating to a payment transaction according to any one of claims 1 and 2, when said program is executed by a processor of the device of claim 3.

6. A method for selecting a payment transaction mode to carry out a payment transaction initiated by a payment device, the method being implemented by a communication terminal, the method comprises the following steps:
- receiving at least one signal relating to the payment transaction from the payment device, said payment device being able to implement two payment transaction modes, the transaction modes being an NFC transaction mode and a QR code transaction mode, said received signal being an image of a QR code,
- obtaining, by decoding and extracting said QR code, at least a first piece of information indicating a first possible payment transaction mode for carrying out the payment transaction with the payment device,
- obtaining, from a visual information included in said QR code, at least a second information representative of the emission of an NFC signal by the payment device indicating a second possible payment transaction mode for carrying out the payment transaction with the payment device,
- selection of a payment transaction mode to be used to carry out the payment transaction with the payment device, from the first and second payment transaction modes, on the basis of at least one characteristic of said communication terminal or a characteristic of the payment transaction,
- sending a response signal via a communication channel associated with the selected payment transaction mode to the payment device.

7. Method for selecting according to claim 6, wherein the characteristic of the payment transaction corresponds to a transaction amount.

8. A communication terminal adapted to select a payment transaction mode for carrying out a payment transaction initiated by a payment device, the communication terminal comprising:
- means for receiving at least one signal relating to the payment transaction from the payment device, said payment device being capable of implementing two payment transaction modes, the transaction modes being an NFC transaction mode and a QR code transaction mode, said received signal being an image of a QR code,
- means for obtaining, by decoding and extracting said QR code, at least a first information indicating a first possible payment transaction mode for carrying out the payment transaction with the payment device,
- means for obtaining, from a visual information included in said QR code, at least a second information representative of the emission of an NFC signal by the payment device indicating a second possible payment transaction mode for carrying out the payment transaction with the payment device,
- means for selecting a payment transaction mode to be used to carry out the payment transaction with the payment device, from among the first and second payment transaction modes, on the basis of at least one characteristic of said communication terminal or a characteristic of the payment transaction,
- means for sending a response signal via a communication channel associated with the selected payment transaction mode, to the payment device.

9. A computer program comprising instructions for implementing the method for selecting a payment transaction mode for carrying out a payment transaction initiated by a payment device, according to any one of claims 6 to 7, when said program is executed by a processor of the communication terminal according to claim 8.
